# NEW EUROPEAN PATENT SPECIFICATION

(11) **EP 1 560 387 B2**
(45) Date of publication and mention of the opposition decision: **12.12.2012**
(45) Mention of the grant of the patent: 12.03.2008
(21) Application number: 03753233.0
(22) Date of filing: 28.09.2003
(51) Int. Cl.: H04L 12/66, H04W 76/06

(54) **METHOD FOR DISCONNECTING A WIRELESS LOCAL AREA (WLAN) SUBSCRIBER FROM A WLAN ACCESS NETWORK**
VERFAHREN ZUM TRENNEN EINES WLAN NUTZERS VON EINEM WLAN ZUGANGSNETZ
PROCEDE POUR DECONNECTER UN ABONNE D'UN RESEAU LOCAL RADIO (WLAN)

(30) Priority: 30.09.2002 CN 02143995
(43) Date of publication of application: 03.08.2005
(73) Proprietor: Huawei Technologies Co., Ltd., Shenzhen, Guangdong Province 518129 (CN)
(72) Inventor: LI, Zhiming, Longgang, Shenzhen, Guangdong 518129 (CN)
(74) Representative: Körber, Martin Hans
(86) International application number: PCT/CN2003/000828
(87) International publication number: WO 2004/036854

(56) References cited:
- WO-A-02/054674
- WO-A2-02/19617
- AU-A- 200 119 741
- CN-A- 1 241 882
- KR-A- 2002 036 503
- 3GPP: "3rd Generation Partnership Project" DRAFT 3GPP TS 23.234 V1.10.0, May 2003 (2003-05), pages 1-77, XP002264842
- HUAWEI: "WLAN Inter-working: Purge Procedure" 3GPP TSG SA2 #28, [Online] 11 November 2002 (2002-11-11), pages 1-2, XP002410543 Bangkok, Thailand Retrieved from the Internet: URL:http://www.3gpp.org/FTP/tsg_sa/WG2_Arc h/TSGS2_28_bangkok/tdocs/> [retrieved on 2006-12-04]
- 3GPP: "3GPP TS 23.234 V1.0.0 (2002-09); 3rd Generation Partnership Project; Technical Specification Group Services and System Aspects; WLAN Subsystem; System Description (Release 6)" 3GPP TS 23.234, [Online] September 2002 (2002-09), pages 1-36, XP002410542 Retrieved from the Internet: URL:http://www.3gpp.org> [retrieved on 2006-12-04]

## Description

### Field of the Technology

The invention relates generally to a method for a Wireless Local Area Network (WLAN) interworking with a mobile communication system. More particularly, the invention relates to a process method for use when a WLAN subscriber is initiatively off-line when the WLAN interworks with a 3^{rd} generation mobile communication system.

### Background of the Invention

Along with the development and deployment of WLANs, interworking between a WLAN and a wireless mobile communication system, such as GSM, CDMA, WCDMA, TD-SCDMA and CDMA 2000, has recently become a focus point. For example, the standardization organization of the 3^{rd} Generation Partnership Project (3GPP) has presented a series of standards on the interworking between a WLAN and a 3GPP system. (See 3GPP TS 22.934 and 23.234 presented in August, 2002 for reference.)

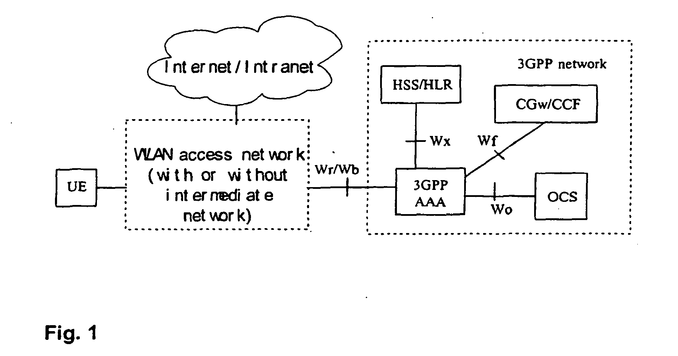

Figure 1 shows a simplified network model diagram of the interworking between a WLAN and a 3GPP system. The WLAN access network (with or without an intermediate network) in Figure 1 acts functionally as a wireless access network of a mobile communication system, and it connects with the user equipment (UE) and the 3GPP home network so that the UE can share the resources and services of the 3GPP system. In addition, the WLAN access network connects directly with the Internet or Intranet, so the UE that connects with the WLAN can share the resources and services of the Internet.

A 3GPP system includes an Authentication, Authorization and Accounting (AAA) server, a Home Subscriber Server/Home Location Register (HSS/HLR), a Charging gateway/Charging Collection Function (CGw/CCF) and an Online Charging System (OCS). The HSS/HLR stores authentication and subscription data for the 3GPP subscriber. The AAA server retrieves authentication information and subscriber profile from the HLR/HSS and performs authentication for a subscriber based on the authentication information and subscriber profile from the HLR/HSS. The OCS is used for online collection of charging information and instructs the WLAN to disconnect from the pre-paid subscriber when his account is out of money. The CGw/CCF is used for offline charging.

In Figure 1, the reference points between the WLAN access network and the AAA server of the 3GPP system are Wr/Wb, wherein the Wr is used to transport authentication and authorization information with the RADIUS/DIAMETER protocol, and the Wb is used to transport charging information with the RADIUS/DIAMETER protocol. The reference point between the AAA server and the HSS/HLR is Wx, which is used to transport authentication information and subscriber profile with the MAP or DIAMETER protocol. The reference point between the AAA server and the OCS is Wo, which is used to transport on-line charging information with the DIAMETER protocol. When a subscriber wants to access the 3GPP network or the Internet/Intranet through the WLAN, the procedure is as follows: first, the AAA server authenticates the subscriber and if the authentication is successful, the subscriber is authorized to access the WLAN; and then the WLAN subscriber identity and the AAA server address are registered in the HSS/HLR; only at this time will the subscriber be allowed to access the WLAN.

In the interworking between WLAN and 3GPP system as mentioned above, the following procedures are defined and implemented: subscriber access authentication, authorization and registration performed by the AAA server, and canceling WLAN registration, searching and updating subscriber profile initiated by the HSS/HLR. However, the procedure of canceling subscriber registration initiated by the AAA server has not been defined, which will lead to the following abnormal situations.

For example, when a WLAN subscriber accesses the mobile communication system through a first AAA server 1, the first AAA server address is registered in the HSS/HLR. Later, when the WLAN subscriber disconnects from the original point and roams to another position, the WLAN subscriber accesses the mobile communication system through a second AAA server, and the second AAA server address is registered in the HSS/HLR. In this case, if the AAA server has not initiated a procedure for canceling the first AAA server address, the WLAN subscriber will correspond to two AAA server addresses.

In another example, when a WLAN subscriber disconnects actively, or the WLAN subscriber is disconnected by the Online Charging System, since the procedure of the AAA server initiating a cancellation of the WLAN subscriber registration in the HSS/HLR has not been defined and therefore is absent, the connection between the WLAN subscriber and the AAA server breaks off while the WLAN subscriber registration information still exists in the HSS/HLR. In general, the time interval from successful authentication to cancellation of registration information of a subscriber, is taken as the service time for charging; in this case if the cancelling message cannot be sent because the UE shuts down abnormally or operates in an abnormal way, the charging process will continue with the WLAN subscriber already disconnected from the system, thus leading to a charging error.

### Summary of the Invention

The objective of the invention is to provide a method in interworking WLAN and 3G systems for canceling the registration information in the HSS/HLR when the WLAN subscriber disconnects actively.

According to the invention, there is provided
a method for use when a WLAN (Wireless Local Area Network) subscriber initiates disconnection when a WLAN interworks with a mobile communication system, includes,
requesting, by the WLAN subscriber, to disconnect from the WLAN access network;
receiving, by an AAA (Authentication, Authorization and Accounting) server of the mobile communication system, a disconnection request message from the WLAN access network and detecting whether a HSS/HLR (Home Subscriber Server/Home Location Register) has successfully cancelled the subscriber registration information of the WLAN subscriber;
instructing, by the AAA server, the WLAN access network to disconnect from the WLAN subscriber, if the HSS/HLR has successfully cancelled the subscriber registration information of the WLAN subscriber.

The step of the AAA server detecting whether the HSS/HLR has successfully cancelled subscriber registration information may include,
having received the disconnection request message from the WLAN access network, sending by the AAA server sending a cancel registration request message with a Permanent Identity and a Cause relating to the reason for requesting disconnection to the HSS/HLR;
sending by, the HSS/HLR, to the AAA server a cancel WLAN registration message with an identification identifying the permanent identity of the WLAN subscriber;
returning, by the AAA server, a cancel registration acknowledgement message to the HSS/HLR;
in response to the cancel registration acknowledgement message, canceling, by the HSS/HLR, the subscriber registration information.

The step of the AAA server detecting whether the HSS/HLR has successfully cancelled the subscriber registration information may include,
having received the subscriber's disconnection request message from the WLAN access network, sending, by they AAA server to the HSS/HLR a cancel registration request message with the Permanent Identity of the subscriber and the Cause relating to the reason for requesting disconnection;
in response to the cancel registration request message from the AAA server, the HSS/HLR canceling the subscriber registration information, then returning to the AAA server the cancel registration acknowledgement message.

The step of instructing, by the AAA server, the WLAN access network to disconnect from the WLAM subscriber may comprise, the AAA server instructing he WLAN access network to disconnect from the subscriber by returning a disconnection response message to the WLAN access network after returning to the HSS/HLR the cancel registration acknowledgement message.

The method may further comprise, the AAA server detecting whether an OCS (Online Charging System) has successfully stopped accounting operation, if yes, instructing the WLAN access network to disconnect from the WLAN subscriber otherwise ending.

In the method described above, the AAA server will decide whether to instruct the WLAN access network to disconnect from the subscriber according to whether the HSS/HLR has successfully cancelled the subscriber registration information so as to ensure the HSS/HLR information is unique and consistent. Furthermore, whether to instruct the WLAN access network to disconnect from the subscriber depends on whether the OCS has stopped the charging operation. Only when the above two requirements have been satisfied will the WLAN access network disconnect from the subscriber, so the subscriber registration information in the HSS/HLR is consistent and unique, and the charging error mentioned above will not occur.

### Brief Description of the Drawings

Figure 1 shows a simplified model of the interworking between a WLAN and a 3GPP network;
Figure 2 shows the flowchart of a first embodiment of the invention;
Figure 3 shows another flowchart of the first embodiment of the invention;
Figure 4 shows the flowchart of a second embodiment of the invention; and
Figure 5 shows the flowchart of a third embodiment of the invention.

### Embodiments of the Invention

The invention will be described in more detail with reference to the accompanying drawings.

The core thinking of the invention is that cancellation of registration information of the subscriber in the HSS/HLR must be successful before the AAA server instructs the WLAN access network to disconnect from the subscriber actively requesting a disconnection.

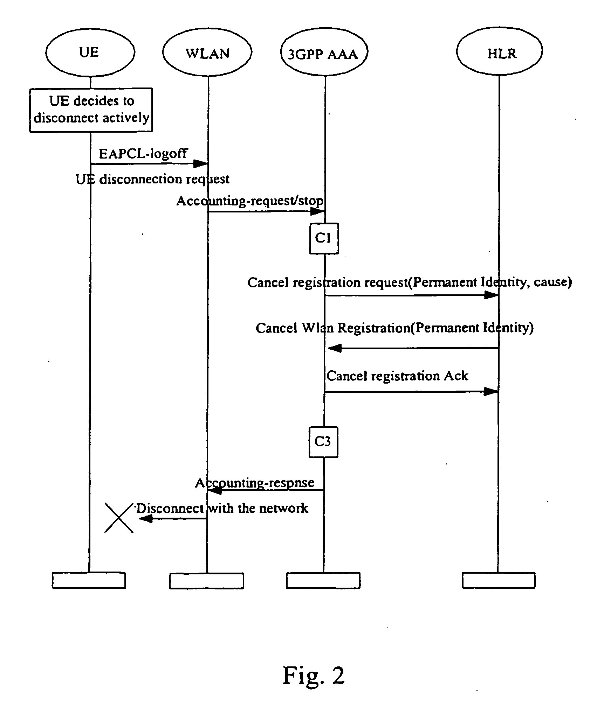

In the following, the process when a WLAN subscriber in the interworking WLAN - 3GPPsystem actively requests disconnection from the WLAN is described with reference to Figures 2, 3 and 4. It should be understood that the invention could be deployed to the situation where the WLAN interworks with other mobile communication systems.

The WLAN access network includes an access point (AP) for UE to access the WLAN and a router that routes a calling, wherein the technical specification for UE to access the AP may be referred to in the IEEE 802.11 standard.

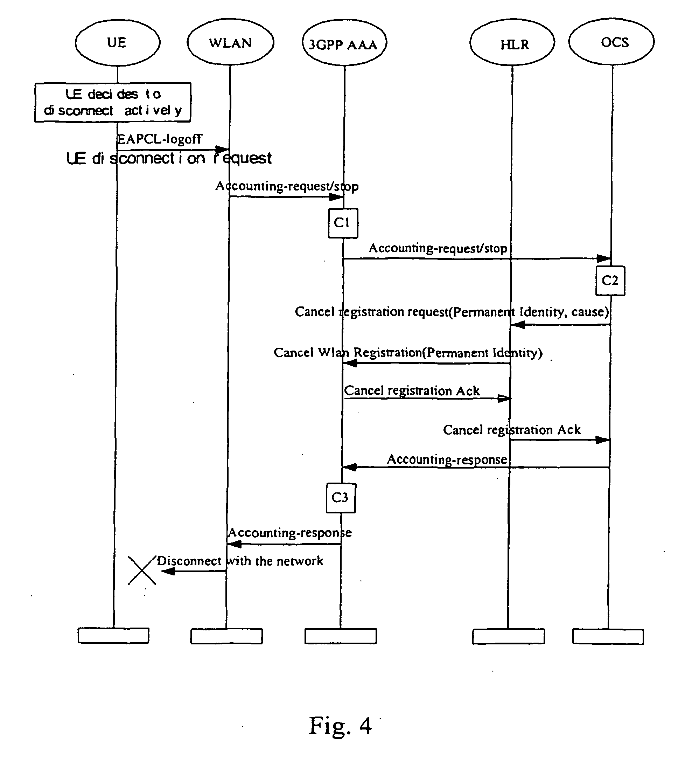

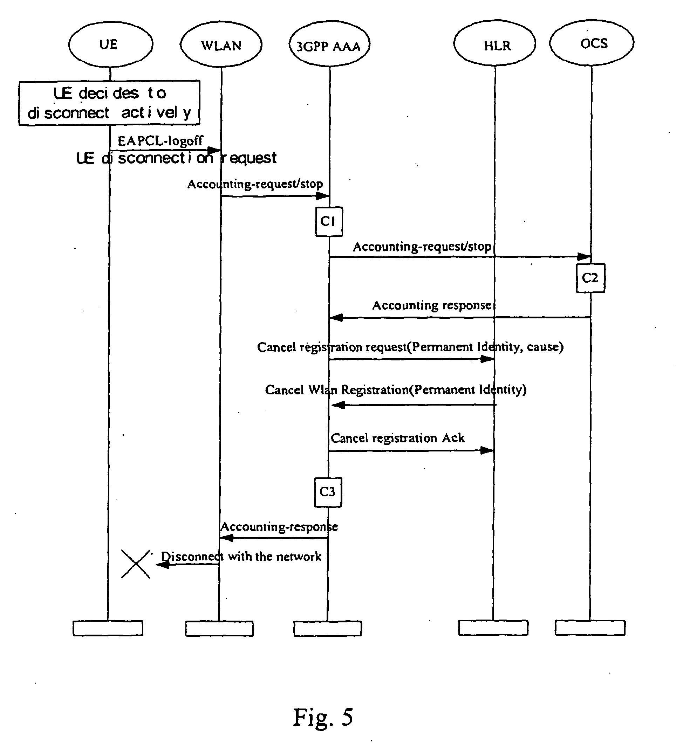

In the following preferred embodiments, the reference points Wr and Wb between the WLAN access network and the AAA server of the 3GPP system comply with the RADIUS/DIAMETER protocol; the reference point Wx between the AAA server and the HSS/HLR complies with the MAP or DIAMETER protocol; the reference point Wo between the AAA server and the OCS complies with the DIAMETER protocol. In addition, a reference point Wz between the HSS/HLR and OCS is defined. The reference point Wz which has not been shown in Figure 1 but is involved in Figures 4 and 5 complies with the MAP, RADIUS or DIAMETER protocol.

The first embodiment shown in Figure 2 is a disconnection procedure initiated by the WLAN subscriber. When a WLAN subscriber wants to logoff, first the WLAN subscriber sends an EAPOL-logoff message to the WLAN AP for requesting the disconnection. Having received the EAPOL-logoff message, the WLAN access network sends a disconnection request message such as an Accounting-request/stop message to the AAA server of the 3GPP network through the Wr/Wb with the RADIUS or DIAMETER protocols. At point C1, having received the Accounting-stop message, the AAA server sends a Cancel Registration Request message, which includes the Permanent Identity of the subscriber and the Cause relating to the reason for requesting disconnection, to the HSS/HLR through the Wx in order to cancel the subscriber registration information in the HSS/HLR.

Having received the Cancel Registration Request message, the HSS/HLR does not cancel the registration information immediately, instead it sends a Cancel WLAN Registration message with the Permanent Identity parameter to the AAA server in order to confirm whether the registration information should be cancelled; and the AAA server returns a Cancel Registration ACK to the HSS/HLR through the Wx to confirm that the registration information should be cancelled because the WLAN subscriber has indeed sent its logoff message to the AAA server through the WLAN. Having received the Cancel Registration ACK message, the HSS/HLR cancels the subscriber registration information.

At point C3, having returned the Cancel Registration ACK message to the HSS/HLR, the AAA server returns a disconnection response message such as an Accounting-response message to the WLAN access network instructing it to disconnect from the subscriber, the WLAN access network then disconnects from the subscriber immediately.

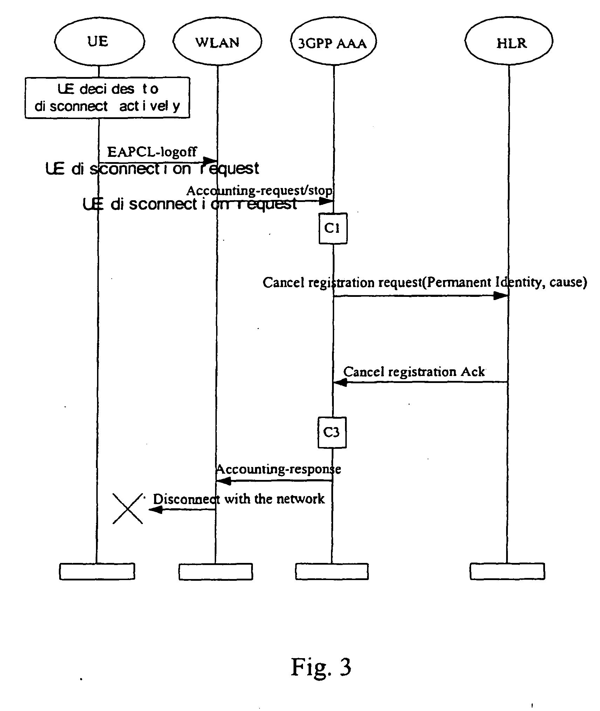

Between points C1 and C3 mentioned above, when the AAA server initiates a registration cancellation in the HSS/HLR, it is enough to take only two steps as shown in Figure 3. Having received the Accounting-stop message, at point C1 the AAA server sends a Cancel Registration Request message, which includes the Permanent Identity of the subscriber and the Cause relating to the reason for requesting disconnection, to the HSS/HLR through the Wx in order to cancel the subscriber registration information in the HSS/HLR. Having received the Cancel Registration Request message, the HSS/HLR cancels the subscriber registration information immediately and returns a Cancel Registration ACK message to the AAA server.

In the following embodiment, it is assured that disconnection between the WLAN access network and the WLAN subscriber will be operated after the registration cancellation has been done and the accounting operated by the OSC has stopped successfully. In Figure 4, when the WLAN subscriber wants to logoff, first it sends the EAPOL-logoff message to the WLAN AP requesting disconnection. Having received the EAPOL-logoff message, the WLAN access network sends an Accounting-request/stop message to the AAA server of the 3GPP network through the Wr/Wb with the RADIUS or DIAMETER protocols asking to stop charging the subscriber. At point C1, having received the Accounting-request/stop message from the WLAN, the AAA server sends an Accounting-request/stop message to the OCS through the Wo with the DIAMETER protocol asking the OCS to stop the accounting operation for the subscriber.

At point C2, having received the Accounting-request/stop message from the AAA server, the OCS stops the accounting operation for the subscriber based on a pre-defined sub-procedure. When the charging operation has been stopped at point C2, the OCS sends a Cancel Registration Request message, which includes the Permanent Identity of the subscriber and the Cause relating to the reason for requesting disconnection, to the HSS/HLR through the Wz with the MAP, the RADIUS or the DIAMETER protocol in order to cancel the subscriber registration information in the HSS/HLR.

Having received the Cancel Registration Request message, the HSS/HLR does not cancel the registration information immediately, instead it sends the Cancel WLAN Registration message with the Permanent Identity parameter to the AAA server through the Wx to confirm whether the registration information should be cancelled; and the AAA server returns the Cancel Registration ACK to the HSS/HLR through the Wx to confirm that the registration information should be cancelled. Having received the Cancel Registration ACK message from the AAA server, the HSS/HLR cancels the subscriber registration information and sends a Cancel Registration ACK message to the OCS to inform that the cancellation has been done.

Having received the Cancel Registration ACK message from the HSS/HLR, the OCS sends an Accounting-response message to the AAA server to confirm that the subscriber registration has been cancelled and the accounting operation has been stopped.

At point C3, having received the above Accounting-response message, the AAA server sends the Accounting-response message to the WLAN access network instructing it to disconnect from the subscriber, then the WLAN access network disconnects from the subscriber immediately.

In a third embodiment as shown in Figure 5, when a WLAN subscriber wants to logoff, first it sends the EAPOL-logoff message to the WLAN AP requesting disconnection. Having received the EAPOL-logoff message, the WLAN access network sends the Accounting-request/stop message to the AAA server of the 3GPP network through the Wr/Wb with the RADIUS or DIAMETER protocol asking to stop the accounting for the subscriber.

At point C1, having received the Accounting-request/stop message from the WLAN, the AAA server sends the Accounting-request/stop message to the OCS through the Wo asking the OCS to stop the accounting operation for the subscriber. At point C2, having received the Accounting-request/stop message from the AAA server, the OCS stops the accounting operation for the subscriber based on a pre-defined sub-procedure. When the accounting operation has been stopped, the OCS returns the Accounting-response message to the AAA server through the Wo to indicate that the accounting has been stopped.

On the other hand, the AAA server sends the Cancel Registration Request message, which includes the Permanent Identity of the subscriber and the Cause relating to the reason for requesting disconnection, to the HSS/HLR through the Wx in order to cancel the subscriber registration information in the HSS/HLR.

Having received the Cancel Registration Request message, the HSS/HLR does not cancel the registration information immediately, instead it sends the Cancel WLAN Registration message with the Permanent Identity parameter to the AAA server through the Wx to confirm whether the registration information should be cancelled; and the AAA server returns the Cancel Registration ACK to the HSS/HLR through the Wx to confirm that the registration information should be cancelled. Having received the Cancel Registration ACK message from the AAA server, the HSS/HLR cancels the subscriber registration information.

At point C3, having received the above Accounting-response message from the OCS and sent the Cancel Registration ACK to the HSS/HLR, the AAA server sends the Accounting-response message to the WLAN access network instructing disconnection from the subscriber, then the WLAN access network disconnects from the subscriber immediately.

It should be noted that in the third embodiment, between points C1 and C3as shown in Figure 5, having received the Accounting-request/stop message from the WLAN access network, the AAA server may simultaneously send the Accounting-request/stop message and the Cancel registration request message to the HSS/HLR and OCS, respectively; or it sends the Cancel registration request message first and then the Accounting-request/stop message; or it sends the Accounting-request/stop message first and then the Cancel registration request message; i.e. the sequence of sending these two messages is not essential to the invention. It is only necessary to assure at point C3 that the step of sending the Accounting-response to the WLAN access network should be after the step of the AAA server having received the Accounting-response message from the OCS and the Cancel Registration ACK message from the HSS/HLR.

Similar to the procedure shown in Figure 3, in the third embodiment the procedure for canceling registration information of the HSS/HLR may include only two steps: at C1 point, having received the Accounting-stop message, the AAA server sends the Cancel Registration Request message, which includes the Permanent Identity of the subscriber and the Cause relating to the reason for requesting disconnection, to the HSS/HLR through the Wx in order to cancel the subscriber registration information in the HSS/HLR; and having received the Cancel Registration Request message, the HSS/HLR cancels the subscriber registration information immediately and returns a Cancel Registration ACK message to the AAA server.

## Claims

1. A method for use when a Wireless Local Area Network, WLAN, subscriber initiates disconnection when a WLAN interworks with a mobile communication system, comprising,
requesting, by the WLAN subscriber, to disconnect from the WLAN access network;
receiving, by an Authentication, Authorization and Accounting, AAA, server of the mobile communication system, a disconnection request message from the WLAN access network and detecting whether a Home Subscriber Server/Home Location Register, HSS/HLR has successfully cancelled subscriber registration information of the WLAN subscriber and whether an Online Charging System, OCS, has successfully stopped the accounting operation;
instructing by the AAA server, the WLAN access network to disconnect from the WLAN subscriber, if the HSS/HLR has successfully cancelled the subscriber registration information of the WLAN subscriber and the OCS has successfully stopped the accounting operation.

2. A method according to Claim 1, wherein the step of requesting by the WLAN subscriber, to disconnect from the WLAN access network comprises: sending, by the WLAN subscriber, an EAPOL-logoff message to the WLAN access network to request disconnection from the WLAN access network, and sending, by the WLAN access network, the disconnection request message to the AAA server.

3. A method according to Claim 1, wherein the step of detecting, by the AAA server, whether the HSS/HLR has successfully cancelled the subscriber registration information of the WLAN subscriber and whether the Online Charging System, OCS, has successfully stopped the accounting operation comprises,
having received the disconnection request message from the WLAN access network, sending, by the AAA server, an accounting request/stop message to the OCS;
in response to the accounting request/stop message, stopping, by the OCS, the accounting operation, and then sending a cancel registration request message that includes the Permanent Identity of the subscriber and the Cause relating to the reason for requesting disconnection to the HSS/HLR;
having cancelled the subscriber registration information, sending, by the HSS/HLR, a cancel registration acknowledgement message to the OCS, and returning, by the OCS, an accounting response message to the AAA server.

4. A method according to Claim 3, wherein the step of cancelling the subscriber registration information comprises,
having received the cancel registration request message from the OCS, sending, by the HSS/HLR, a cancel WLAN registration message with the Permanent Identity parameter to the AAA server; returning, by the AAA server, a cancel registration acknowledgement message to the HSS/HLR;
in response to the cancel registration acknowledgement message from the AAA server, canceling, by the HSS/HLR, the subscriber registration information.

5. A method according to Claim 4, wherein the step of instructing, by the AAA server, the WLAN access network to disconnect from the WLAN subscriber comprises
having received the accounting response message from the OCS, sending, by the AAA server, the disconnection response message to the WLAN access network to instruct disconnection from the WLAN subscriber.

6. A method according to Claim 1, wherein the step of detecting, by the AAA server, whether the OCS has successfully stopped the accounting operation comprises,
having received the disconnection request message from the WLAN access network, sending, by the AAA server, an accounting request/stop message to the OCS;
in response to the accounting request/stop message, stopping, by the OCS, the accounting operation for the subscriber, and then returning an accounting stop response message to the AAA server.

7. A method according to Claim 6, wherein the step of detecting, by the AAA server whether the HSS/HLR has successfully cancelled the subscriber registration information comprises,
having received the disconnection request message from the WLAN access network, sending, by the AAA server, a cancel registration request message, which includes the Permanent Identity of the subscriber and the Cause relating to the reason for requesting disconnection, to the HSS/HLR;
sending, by the HSS/HLR, a cancel WLAN registration message with the Permanent Identity parameter to the AAA server; returning, by the AAA server, a cancel registration acknowledgement message to the HSS/HLR;
in response to the cancel registration acknowledgement message, canceling by the HSS/HLR, the subscriber registration information.

8. A method according to Claim 7, wherein the step of instructing, by the AAA server, the WLAN access network to disconnect from the WLAN subscriber comprises: having received the accounting response message from the OCS and the cancel WLAN registration message from the HSS/HLR, sending, by the AAA server, a disconnection response message to the WLAN access network to instruct the WLAN access network to disconnect from the WLAN subscriber.

9. A method according to Claim 8, wherein the cancel registration request message sent to the HSS/HLR by the AAA server, the cancel WLAN registration message sent to the AAA server by the HSS/HLR, and the cancel registration acknowledgement message sent to the HSS/HLR by the AAA server are based on a MAP or a DIAMETER protocol;
the disconnection request message sent to the AAA server by the WLAN access network and the disconnection response message returned to the WLAN access network by the AAA server are based on the RADIUS or DIAMETER protocol;
the accounting request/stop message sent to the OCS by the AAA server, and the accounting response message returned to the AAA server by the OCS are based on the DIAMETER protocol.

10. A method according to Claim 5, wherein the disconnection request message sent to the AAA server by the WLAN access network and the disconnection response message returned to the WLAN access network by the AAA server are based on the RADIUS or the DIAMETER protocol;
the accounting request/stop message sent to the OCS by the AAA server, and the accounting response message returned to the AAA server by the OCS are based on the DIAMETER protocol;
the cancel WLAN registration message sent to the AAA server by the HSS/HLR and the cancel registration acknowledgement message returned to the HSS/HLR by the AAA server are based on the MAP or the DIAMETER protocol;
the cancel registration request message sent to the HSS/HLR by the OCS is based on the MAP, the RADIUS or the DIAMETER protocol;
the cancel registration acknowledgement message sent to the OCS by the HSS/HLR is based on the MAP, the RADIUS and the DIAMETER protocol.

## Patentansprüche

1. Verfahren zur Verwendung, wenn ein WLAN (drahtloses lokales Netz)-Teilnehmer eine Trennung auslöst, wenn ein WLAN mit einem Mobilkommunikationssystem netzüberschreitend kommuniziert, umfassend:
Anforderung durch den WLAN-Teilnehmer, vom WLAN-Zugangsnetz getrennt zu werden;
Empfang durch einen AAA(Authentifizierungs-, Autorisierungs- und Abrechnungs)-Server des Mobilkommunikationssystems einer Trennungs-Anforderungsnachricht vom WLAN-Zugangsnetz und Detektion, ob ein Heimatteilnehmerserver/Heimatregister, HSS/HLR, die Teilnehmer-Registrierungsinformation des WLAN-Teilnehmers erfolgreich gelöscht hat und ob ein Online-Charging-System, OCS, die Abrechnungsoperation erfolgreich gestoppt hat;
Anweisung durch den AAA-Server an das WLAN-Zugangsnetz, sich vom WLAN-Teilnehmer zu trennen, falls der HSS/HLR die Teilnehmer-Registrierungsinformation des WLAN-Teilnehmers erfolgreich gelöscht hat und das OCS die Abrechnungsoperation erfolgreich gestoppt hat.

2. Verfahren nach Anspruch 1, worin der Schritt des Anfordems durch den WLAN-Teilnehmer, vom WLAN-Zugangsnetz getrennt zu werden, umfasst:
Senden durch den WLAN-Teilnehmer einer EAPOL-Abmeldungsnachricht an das WLAN-Zugangsnetz, um Trennung vom WLAN-Zugangsnetz anzufordern; und
Senden durch das WLAN-Zugangsnetz der Trennungs-Anforderungsnachricht an den AAA-Server.

3. Verfahren nach Anspruch 1, worin der Schritt des Detektierens durch den AAA-Server, ob der HSS/HLR die Teilnehmer-Registrierungsinformation des WLAN-Teilnehmers erfolgreich gelöscht hat und ob das Online-Charging-System, OCS, die Abrechnungsoperation erfolgreich gestoppt hat, umfasst,
nach Empfang der Trennungs-Anforderungsnachricht vom WLAN-Zugangsnetz, Senden durch den AAA-Server einer Abrechnungsanforderungs-Stoppnachricht an das OCS;
als Antwort auf die Abrechnungsanforderungs-Stoppnachricht Stoppen der Abrechnungsoperation durch das OCS und dann Senden einer Registrierungslöschungs-Anforderungsnachricht an den HSS/HLR, die die permanente Identität des Teilnehmers und die Ursache enthält, die den Grund für die Trennungsanforderung betrifft;
nach Löschung der Teilnehmer-Registrierungsinformation, Senden durch den HSS/HLR einer Registrierungslöschungs-Bestätigungsnachricht an das OCS; und Zurückschicken durch das OCS einer Abrechnungs-Antwortnachricht an den AAA-Server.

4. Verfahren nach Anspruch 3, worin der Schritt des Löschens der Teilnehmer-Registrierungsinformation umfasst,
nach Empfang der Registrierungslöschungs-Anforderungsnachricht vom OCS, Senden durch den HSS/HLR einer WLAN-Registrierungs-Löschungsnachricht mit dem permanenten Identitätsparameter an den AAA-Server;
Zurücksenden durch den AAA-Server einer Registrierungslöschungs-Bestätigungsnachricht an den HSS/HLR;
als Antwort auf die Registrierungslöschungs-Bestätigungsnachricht vom AAA-Server Löschen durch den HSS/HLR der Teilnehmer-Registrierungsinformation.

5. Verfahren nach Anspruch 4, worin der Schritt des Anweisens durch den AAA-Server, dass sich das WLAN-Zugangsnetz vom WLAN-Teilnehmer trennt, umfasst:
nach Empfang der Abrechnungs-Antwortnachricht vom OCS, das Senden durch den AAA-Server der Trennungs-Antwortnachricht an das WLAN-Zugangsnetz, um Trennung vom WLAN-Teilnehmer anzuweisen.

6. Verfahren nach Anspruch 1, worin der Schritt des Detektierens durch den AAA-Server, ob das OCS die Abrechnungsoperation erfolgreich gestoppt hat, umfasst, nach Empfang der Trennungs-Anforderungsnachricht vom WLAN-Zugangsnetz, Senden durch den AAA-Server einer Abrechnungsanforderungs-Stoppnachricht an das OCS;
als Antwort auf die Abrechnungsanforderungs-Stoppnachricht Stoppen durch das OCS der Abrechnungsoperation für den Teilnehmer und dann Zurücksenden einer Abrechnungsstopp-Antwortnachricht an den AAA-Server.

7. Verfahren nach Anspruch 6, worin der Schritt des Detektierens durch den AAA-Server, ob der HSS/HLR die Teilnehmer-Registrierungsinformation erfolgreich gelöscht hat, umfasst,
nach Empfang der Trennungs-Anforderungsnachricht vom WLAN-Zugangsnetz, Senden durch den AAA-Server einer Registrierungslöschungs-Anforderungsnachricht an den HSS/HLR, die die permanente Identität des Teilnehmers und die Ursache umfasst, die den Grund für die Trennungsanforderung betrifft;
Senden durch den HSS/HLR einer WLAN-Registrierungs-Löschungsnachricht mit dem permanenten Identitätsparameter an den AAA-Server;
Zurücksenden durch den AAA-Server einer Registrierungslöschungs-Bestätigungsnachricht an den HSS/HLR;
als Antwort auf die Registrierungslöschungs-Bestätigungsnachricht, Löschen der Teilnehmer-Registrierungsinformation durch den HSS/HLR.

8. Verfahren nach Anspruch 7, worin der Schritt des Anweisens durch den AAA-Server, dass sich das WLAN-Zugangsnetz vom WLAN-Teilnehmer trennt, umfasst:
nach Empfang der Abrechnungs-Antwortnachricht vom OCS und der WLAN-Registrierungs-Löschungsnachricht vom HSS/HLR, Senden durch den AAA-Server einer Trennungs-Antwortnachricht an das WLAN-Zugangsnetz, um das WLAN-Zugangsnetz anzuweisen, sich vom WLAN-Teilnehmer zu trennen.

9. Verfahren nach Anspruch 8, worin die vom AAA-Server an den HSS/HLR gesendete Registrierungslöschungs-Anforderungsnachricht, die vom HSS/HLR an den AAA-Server gesendete WLAN-Registrierungs-Löschungsnachricht und die vom AAA-Server an den HSS/HLR gesendete Registrierungslöschungs-Bestätigungsnachricht auf einem MAP- oder einem DIAMETER-Protokoll basieren; die vom WLAN-Zugangsnetz an den AAA-Server gesendete Trennungs-Anforderungsnachricht und die vom AAA-Server an das WLAN-Zugangsnetz zurückgesendete Trennungs-Antwortnachricht auf dem RADIUS- oder DIAMETER-Protokoll basieren;
die vom AAA-Server an das OCS gesendete Abrechnungsanforderungs-Stoppnachricht und die vom OCS an den AAA-Server zurückgesendete Abrechnungs-Antwortnachricht auf dem DIAMETER-Protokoll basieren.

10. Verfahren nach Anspruch 5, worin die vom WLAN-Zugangsnetz an den AAA-Server gesendete Trennungs-Anforderungsnachricht und die vom AAA-Server an das WLAN-Zugangsnetz zurückgesendete Trennungs-Antwortnachricht auf dem RADIUS- oder dem DIAMETER-Protokoll basieren;
die vom AAA-Server an das OCS gesendete Abrechnungsanforderungs-Stoppnachricht und die vom OCS an den AAA-Server zurückgeschickte Abrechnungs-Antwortnachricht auf dem DIAMETER-Protokoll basieren; die vom HSS/HLR an den AAA-Server gesendete WLAN-Registrierungs-Löschungsnachricht und die vom AAA-Server an den HSS/HLR zurückgesendete Registrierungslöschungs-Bestätigungsnachricht auf dem MAP- oder dem DIAMETER-Protokoll basieren;
die vom OCS an den HSS/HLR gesendete Registrierungslöschungs-Anforderungsnachricht auf dem MAP-, dem RADIUS- oder dem DIAMETER-Protokoll basiert;
die vom HSS/HLR an das OCS gesendete Registrierungslöschungs-Bestätigungsnachricht auf dem MAP-, dem RADIUS- und dem DIAMETER-Protokoll basiert.

## Revendications

1. Procédé destiné à être utilisé lorsqu'un abonné de réseau local sans fil, (WLAN) initie une déconnexion lorsqu'un réseau local sans fil (WLAN) est en interfonctionnement avec un système de communication mobile, comportant :
demander par l'abonné de réseau local sans fil (WLAN) de se déconnecter du réseau d'accès de réseau local sans fil (WLAN) ; recevoir, au moyen d'un serveur d'authentification, d'autorisation et de comptabilité (AAA) du système de communication mobile, un message de demande de déconnexion du réseau d'accès de réseau local sans fil (WLAN) et détecter si un serveur d'abonné résidentiel/enregistreur de localisation nominal (HSS/HLR) a réussi à supprimer des informations d'enregistrement d'abonné de l'abonné de réseau local sans fil (WLAN) et si un système de facturation en ligne (OCS), a réussi à mettre fin à l'opération de comptabilité ; ordonner, au moyen du serveur d'authentification, d'autorisation et de comptabilité (AAA), au réseau d'accès de réseau local sans fil (WLAN) de se déconnecter de l'abonné de réseau local sans fil (WLAN), si le serveur d'abonné résidentiel/enregistreur de localisation nominal (HSS/HLR) a réussi à supprimer les informations d'enregistrement d'abonné de l'abonné de réseau local sans fil (WLAN) et si le système de facturation en ligne (OCS) a réussi à mettre fin à l'opération de comptabilité.

2. Procédé selon la revendication 1, dans lequel l'étape consistant à demander par l'abonné de réseau local sans fil (WLAN) de se déconnecter du réseau d'accès de réseau local sans fil (WLAN) comporte ; transmettre, au moyen de l'abonné de réseau local sans fil (WLAN), un message de déconnexion de protocole EAPOL (EAP sur LAN) au réseau d'accès de réseau local sans fil (WLAN) en vue de demander une déconnexion du réseau d'accès de réseau local sans fil (WLAN), et transmettre, au moyen du réseau d'accès de réseau local sans fil (WLAN), le message de demande de déconnexion au serveur d'authentification, d'autorisation et de comptabilité (AAA).

3. Procédé selon la revendication 1, dans lequel l'étape consistant à détecter, au moyen du serveur d'authentification, d'autorisation et de comptabilité (AAA), si le serveur d'abonné résidentiel/enregistreur de localisation nominal (HSS/HLR) a réussi à supprimer les informations d'enregistrement d'abonné, après réception du message de demande de déconnexion du réseau d'accès de réseau local sans fil (WLAN), transmettre, au moyen du serveur d'authentification, d'autorisation et de comptabilité (AAA), un message d'arrêt/de demande de comptabilité au système de facturation en ligne (OCS) ; en réponse au message d'arrêt/de demande de comptabilité, mettre fin, au moyen du système de facturation en ligne (OCS), à l'opération de comptabilité, et transmettre ensuite un message de demande de suppression d'enregistrement qui comporte l'identité permanente de l'abonné et la cause relative à la raison motivant la demande de déconnexion au serveur d'abonné résidentiel/enregistreur de localisation nominal (HSS/HLR) ; après suppression des informations d'enregistrement d'abonné, transmettre, au moyen du serveur d'abonné résidentiel/enregistreur de localisation nominal (HSS/HLR), un message d'accusé de réception de suppression d'enregistrement au système de facturation en ligne (OCS), et renvoyer, au moyen du système de facturation en ligne (OCS), un message de réponse de comptabilité au serveur d'authentification, d'autorisation et de comptabilité (AAA).

4. Procédé selon la revendication 3, dans lequel l'étape consistant à supprimer les informations d'enregistrement d'abonné comporte :
après réception du message de demande de suppression d'enregistrement par le système de facturation en ligne (OCS), transmettre, au moyen du serveur d'abonné résidentiel/enregistreur de localisation nominal (HSS/HLR), un message d'enregistrement de suppression de réseau local sans fil (WLAN) avec le paramètre d'identité permanente au serveur d'authentification, d'autorisation et de comptabilité (AAA) ; renvoyer, au moyen du serveur d'authentification, d'autorisation et de comptabilité (AAA), un message d'accusé de réception de suppression d'enregistrement au serveur d'abonné résidentiel/enregistreur de localisation nominal (HSS/HLR) ; en réponse au message d'accusé de réception de suppression d'enregistrement du serveur d'authentification, d'autorisation et de comptabilité (AAA), supprimer, au moyen du serveur d'abonné résidentiel/enregistreur de localisation nominal (HSS/HLR), les informations d'enregistrement d'abonné.

5. Procédé selon la revendication 4, dans lequel l'étape consistant à demander, au moyen du serveur d'authentification, d'autorisation et de comptabilité (AAA), au réseau d'accès de réseau local sans fil (WLAN) de se déconnecter de l'abonné de réseau local sans fil (WLAN) comporte :
après réception du message de réponse de comptabilité du système de facturation en ligne (OCS), transmettre, au moyen du serveur d'authentification, d'autorisation et de comptabilité (AAA), le message de réponse de déconnexion au réseau d'accès de réseau local sans fil (WLAN) en vue de demander la déconnexion de l'abonné de réseau local sans fil (WLAN).

6. Procédé selon la revendication 1, dans lequel l'étape consistant à détecter, au moyen du serveur d'authentification, d'autorisation et de comptabilité (AAA), si le système de facturation en ligne (OCS) a réussi à mettre fin à l'opération de comptabilité comporte :
après réception du message de demande de déconnexion du réseau d'accès de réseau local sans fil (WLAN), transmettre, au moyen du serveur d'authentification, d'autorisation et de comptabilité (AAA), un message d'arrêt/de demande de comptabilité au système de facturation en ligne (OCS) ; en réponse au message d'arrêt/de demande de comptabilité, mettre fin, au moyen du système de facturation en ligne (OCS), à l'opération de comptabilité connexe à l'abonné, et renvoyer ensuite un message de réponse d'arrêt de comptabilité au serveur d'authentification, d'autorisation et de comptabilité (AAA).

7. Procédé selon la revendication 6, dans lequel l'étape consistant à détecter, au moyen du serveur d'authentification, d'autorisation et de comptabilité (AAA) si le serveur d'abonné résidentiel/enregistreur de localisation nominal (HSS/HLR) a réussi à supprimer les informations d'enregistrement d'abonné comporte :
après réception du message de demande de déconnexion du réseau d'accès de réseau local sans fil (WLAN), transmettre au moyen du serveur d'authentification, d'autorisation et de comptabilité (AAA), un message de demande de suppression d'enregistrement, qui inclut l'identité permanente de l'abonné et la cause relative à la raison motivant la demande de déconnexion, au serveur d'abonné résidentiel/enregistreur de localisation nominal (HSS/HLR) ; transmettre, au moyen du serveur d'abonné résidentiel/enregistreur de localisation nominal (HSS/HLR), un message d'enregistrement de suppression de réseau local sans fil (WLAN) incluant le paramètre d'identité permanente, au serveur d'authentification, d'autorisation et de comptabilité (AAA) ; renvoyer, au moyen du serveur d'authentification, d'autorisation et de comptabilité (AAA), un message d'accusé de réception de suppression d'enregistrement au serveur d'abonné résidentiel/enregistreur de localisation nominal (HSS/HLR) ; en réponse au message d'accusé de réception de suppression d'enregistrement, supprimer, au moyen du serveur d'abonné résidentiel/enregistreur de localisation nominal (HSS/HLR), les informations d'enregistrement d'abonné.

8. Procédé selon la revendication 7, dans lequel l'étape consistant à demander, au moyen du serveur d'authentification, d'autorisation et de comptabilité (AAA), au réseau d'accès de réseau local sans fil (WLAN) de se déconnecter de l'abonné de réseau local sans fil (WLAN) comporte :
après réception du message de réponse de comptabilité du système de facturation en ligne (OCS) et du message d'enregistrement de suppression de réseau WLAN du serveur d'abonné résidentiel/enregistreur de localisation nominal (HSS/HLR), transmettre, au moyen du serveur d'authentification, d'autorisation et de comptabilité (AAA), un message de réponse de déconnexion au réseau d'accès de réseau local sans fil (WLAN) en vue de demander au réseau d'accès de réseau local sans fil (WLAN) de se déconnecter de l'abonné de réseau local sans fil (WLAN).

9. Procédé selon la revendication 8, dans lequel le message de demande de suppression d'enregistrement transmis au serveur d'abonné résidentiel/enregistreur de localisation nominal (HSS/HLR) par le serveur d'authentification, d'autorisation et de comptabilité (AAA), le message d'enregistrement de suppression de réseau local sans fil (WLAN) transmis au serveur d'authentification, d'autorisation et de comptabilité (AAA) par le serveur d'abonné résidentiel/enregistreur de localisation nominal (HSS/HLR), et le message d'accusé de réception de suppression d'enregistrement transmis au serveur d'abonné résidentiel/enregistreur de localisation nominal (HSS/HLR) par le serveur d'authentification, d'autorisation et de comptabilité (AAA) sont basés sur un protocole MAP (applicatif du service mobile) ou protocole « DIAMETER » ; le message de demande de déconnexion transmis au serveur d'authentification, d'autorisation et de comptabilité (AAA) par le réseau d'accès de réseau local sans fil (WLAN) et le message de réponse de déconnexion renvoyé au réseau d'accès de réseau local sans fil (WLAN) au moyen du serveur d'authentification, d'autorisation et de comptabilité (AAA) sont basés sur le protocole « RADIUS » (service d'utilisateur d'accès commuté d'authentification à distance) ou le protocole « DIAMETER » ; le message d'arrêt/de demande de comptabilité transmis au système de facturation en ligne (OCS) au moyen du serveur d'authentification, d'autorisation et de comptabilité (AAA), et le message de réponse de comptabilité renvoyé au serveur d'authentification, d'autorisation et de comptabilité (AAA) par le système de facturation en ligne (OCS) sont basés sur le protocole « DIAMETER ».

10. Procédé selon la revendication 5, dans lequel le message de demande de déconnexion transmis au serveur d'authentification, d'autorisation et de comptabilité (AAA) par le réseau d'accès de réseau local sans fil (WLAN) et le message de réponse de déconnexion renvoyé au réseau d'accès de réseau local sans fil (WLAN) au moyen du serveur d'authentification, d'autorisation et de comptabilité (AAA) sont basés sur le protocole « RADIUS » ou le protocole « DIAMETER » ; le message d'arrêt/de demande de comptabilité transmis au système de facturation en ligne (OCS) au moyen du serveur d'authentification, d'autorisation et de comptabilité (AAA), et le message de réponse de comptabilité renvoyé au serveur d'authentification, d'autorisation et de comptabilité (AAA) par le système de facturation en ligne (OCS) sont basés sur le protocole « DIAMETER » ; le message d'enregistrement de suppression de réseau local sans fil (WLAN) transmis au serveur d'authentification, d'autorisation et de comptabilité (AAA) par le serveur d'abonné résidentiel/enregistreur de localisation nominal (HSS/HLR), et le message d'accusé de réception de suppression d'enregistrement renvoyé au serveur d'abonné résidentiel/enregistreur de localisation nominal (HSS/HLR) par le serveur d'authentification, d'autorisation et de comptabilité (AAA) sont basés sur le protocole MAP ou le protocole « DIAMETER » ; le message de demande de suppression d'enregistrement transmis au serveur d'abonné résidentiel/enregistreur de localisation nominal (HSS/HLR) par le système de facturation en ligne (OCS) est basé sur le protocole MAP, le protocole « RADIUS » ou le protocole « DIAMETER » ; le message d'accusé de réception de suppression d'enregistrement transmis au système de facturation en ligne (OCS) par le serveur d'abonné résidentiel/enregistreur de localisation nominal (HSS/HLR), est basé sur le protocole MAP, le protocole « RADIUS » ou le protocole « DIAMETER ».
